# FASCICULE DE BREVET EUROPEEN

(11) **EP 3 736 066 B1**
(45) Date de publication et mention de la délivrance du brevet: **27.03.2024**
(21) Numéro de dépôt: 20173304.5
(22) Date de dépôt: 06.05.2020
(51) Int. Cl.: B23B 5/28, B23Q 17/20

(54) **SYSTÈME ET PROCÉDÉ DE RETAILLAGE DE LA SURFACE DE ROULAGE D'UNE ROUE**
SYSTEM UND VERFAHREN ZUM NACHSCHNEIDEN DER LAUFFLÄCHE EINES RADS
SYSTEM AND METHOD FOR RESIZING THE ROLLING SURFACE OF A WHEEL

(30) Priorité: 07.05.2019 FR 1904754
(43) Date de publication de la demande: 11.11.2020
(73) Titulaire: SNCF Voyageurs, 93200 Saint-Denis (FR)
(72) Inventeur: RICHARD, Bastien, 94320 THIAIS (FR); BERARD, Bruno, 77550 Moissy Cramayel (FR); KLEIBER, Jacques, 58000 Nevers (FR)
(74) Mandataire: Delaveau, Sophie

(56) Documents cités:
- EP-A1- 0 456 845
- DE-A1-102004 045 850
- US-A- 3 667 329
- US-A1- 2013 192 430

## Description

### DOMAINE TECHNIQUE

L'invention s'inscrit dans le domaine de l'entretien des essieux des matériels ferroviaires roulants.

L'invention porte plus particulièrement sur un système, selon le préambule de la revendication 1, et un procédé, selon le préambule de la revendication 6, de retaillage de la surface de roulage des roues des matériels ferroviaires roulants. Un tel système et un tel procédé sont connus du document US 2013/192430 A1.

### ART ANTERIEUR ET INCONVENIENTS DE L'ART ANTERIEUR

Dans le cadre de la maintenance des essieux des matériels ferroviaires roulants, des opérations de retaillage des roues sont réalisées sur un tour de reprofilage dans le but d'éliminer les différents défauts présents au moins sur la surface de roulage des roues. Ces défauts sont du type crique thermique, gerçure, écaillage, empreinte de ballast, ou encore du type géométrique comme les faux ronds.

Ce retaillage, ou reprofilage, est réalisé à l'aide d'un outil de retaillage, par exemple une pointe dure du type pointe au carbure de tungstène, qui balaye la surface de la roue mise en rotation et qui supprime les défauts par enlèvement de matière.

Il est également connu, en particulier du document GB 2544496, un tour de profilage comprenant des moyens de détermination sans contact des défauts présents au niveau des roues, ainsi que des moyens de détermination du profil de roue à retailler. Ces deux outils supplémentaires permettent d'une part de sélectionner uniquement les roues réparables, et d'autre part de retailler la roue tout en conservant son profil précédemment déterminé.

Cependant, la cote d'usure des roues est limitée, et l'art antérieur précité ne permet pas d'optimiser la durée de vie des roues.

### OBJECTIF DE L'INVENTION

L'invention vise donc à proposer un système et un procédé de retaillage permettant d'optimiser la durée de vie des roues.

### EXPOSE DE L'INVENTION

A cet effet, l'invention vise un système de retaillage, selon la revendication 1, du type tour d'au moins une partie de la surface, dite surface de roulage, d'au moins une roue, comprenant des moyens adaptés pour mettre en rotation la roue à retailler autour de son axe, et des moyens de maintenance comportant au moins un outil de retaillage adapté pour retailler au moins la surface de roulage de la roue mise en rotation et au moins un dispositif d'analyse adapté pour déterminer le profil au moins de la surface de roulage de la roue en rotation et des moyens de déplacement des moyens de maintenance selon l'axe de roue pour traiter au moins la surface de roulage de la roue associée, le dispositif d'analyse étant configuré pour déterminer au moins le profil de la surface de roulage préalablement retaillée par l'outil de retaillage, le système de retaillage comprenant aussi des moyens de traitement configurés pour déterminer un écart entre le profil de la surface de roulage retaillée et un profil seuil, et pour commander un traitement supplémentaire de la surface de roulage par les moyens de maintenance si l'écart déterminé est supérieur à un écart seuil, les moyens de maintenance étant configurés pour déterminer le profil d'une première portion de la surface de roulage préalablement retaillée par lesdits moyens de maintenance, pendant que ces derniers retaillent une seconde portion de la surface de roulage.

Le système peut également comporter les caractéristiques optionnelles suivantes considérées isolément ou selon toutes les combinaisons techniques possibles :
- La sonde du dispositif d'analyse et l'outil de retaillage sont séparés par au moins une cloison perpendiculaire à l'axe de roue de manière à protéger ladite sonde.
- Les moyens de maintenance sont configurés pour traiter simultanément les deux roues d'un essieu.
- Le dispositif d'analyse comprend au moins une sonde ponctuelle à courants induits du type courants de Foucault et un appareil générant de tels courants induits qui est relié à ladite sonde, laquelle sonde est adaptée pour mesurer de manière continue et sans contact au moins la distance entre l'extrémité de mesure de la sonde en vis-à-vis de la surface de roulage et la surface de roulage de la roue considérée.

- La sonde du dispositif d'analyse et l'outil de retaillage sont juxtaposés selon un axe parallèle à l'axe de roue.
- L'outil de retaillage comprend au moins une pointe au carbure de tungstène adaptée pour retailler la surface de roulage par enlèvement de matière de la roue considérée.

Un mode de réalisation vise un procédé de retaillage d'au moins une partie de la surface, dite surface de roulage, d'au moins une roue avec un système de retaillage selon l'une quelconque des revendications 1-5, comprenant les étapes successives de :
i. Mise en rotation de la roue à retailler et positionnement de l'outil de retaillage à une première extrémité axiale de la surface de roulage à retailler ;
ii. Retaillage d'une première portion de la surface de roulage par l'outil de retaillage, au niveau de la première extrémité axiale de ladite surface de roulage ;
iii. Translation des moyens de maintenance d'une distance prédéterminée parallèlement à l'axe de la roue en direction d'une seconde extrémité axiale opposée de la surface de roulage ;
iv. Retaillage d'une seconde portion de la surface de roulage adjacente à la première portion et détermination concomitante du profil de la première portion par le dispositif d'analyse ;
v. Répétition des étapes ii à iv jusqu'au retaillage suivi de la détermination du profil d'une dernière portion de la surface de roulage adjacente à la seconde extrémité axiale, de manière à retailler toute la surface de roulage et à déterminer le profil de toute la surface de roulage retaillée ;
vi. Détermination par les moyens de traitement d'au moins un écart entre le profil déterminé à l'étape v et un profil seuil ;
vii. Tant que l'écart déterminé est supérieur à un écart seuil, répétition des étapes ii à vi ;
viii. Lorsqu'aucun écart déterminé n'est supérieur à l'écart seuil, dégagement de l'outil de retaillage de la surface de roulage et arrêt de la rotation de la roue.

L'invention vise également un procédé de retaillage d'au moins une partie de la surface, dite surface de roulage, d'au moins une roue avec un système de retaillage selon l'une quelconque des revendications 1-5, comprenant les étapes successives de :
i. Mise en rotation de la roue à retailler et positionnement de l'outil de retaillage à une première extrémité axiale de la surface de roulage à retailler ;
ii. Retaillage d'une première portion de la surface de roulage par l'outil de retaillage, au niveau de la première extrémité axiale de ladite surface de roulage ;
iii. Translation des moyens de maintenance d'une distance prédéterminée parallèlement à l'axe de la roue en direction d'une seconde extrémité axiale opposée de la surface de roulage, de manière à retailler une seconde portion de la surface de roulage adjacente à la première portion par l'outil de retaillage ;
iv. Répétition de l'étape iii jusqu'au retaillage d'une dernière portion de la surface de roulage adjacente à la seconde extrémité axiale, de manière à retailler toute la surface de roulage ;
v. Translation des moyens de maintenance parallèlement à l'axe de la roue en direction de la première extrémité axiale de la surface de roulage et détermination concomitante du profil de ladite surface de roulage par le dispositif d'analyse ;
vi. Détermination par les moyens de traitement d'au moins un écart entre le profil déterminé à l'étape v et un profil seuil ;
vii. Tant que l'écart déterminé est supérieur à un écart seuil, répétition des étapes ii à vi ;
viii. Lorsqu'aucun écart déterminé n'est supérieur à l'écart seuil, dégagement de l'outil de retaillage de la surface de roulage et arrêt de la rotation de la roue.

Le procédé de retaillage peut également comporter les caractéristiques optionnelles suivantes considérées isolément ou selon toutes les combinaisons techniques possibles :
- La détermination du profil comprend la mesure en continue, par une sonde à courants induits du type courants de Foucault formant partie du dispositif d'analyse, de la distance séparant la surface de roulage de l'extrémité de mesure de la sonde en vis-à-vis de ladite surface de roulage.
- L'étape vi comprend les sous-étapes successives de :
   i. Comparaison des données de distance obtenues avec une valeur de distance seuil ;
   ii. Lorsque la différence entre au moins une donnée de distance et la distance seuil est supérieure à l'écart seuil, déclenchement d'un dispositif d'alarme par les moyens de traitement, indiquant la subsistance d'un défaut présent au moins sur la surface de roulage.
- Le procédé comprend une étape préalable d'étalonnage du dispositif d'analyse.

### PRESENTATION DES FIGURES

D'autres caractéristiques et avantages de l'invention ressortiront clairement de la description qui en est donnée ci-dessous, à titre indicatif et nullement limitatif, en référence aux figures annexées parmi lesquelles :
[Fig. 1] La figure 1 représente une vue de face d'un premier mode de réalisation du système de retaillage de l'invention sur lequel un essieu est installé ;
[Fig. 2] La figure 2 représente une vue de face d'un second mode de réalisation du système de retaillage qui ne correspond pas à l'invention sur lequel un essieu est installé ;
[Fig. 3] La figure 3 représente une courbe de profil déterminé par le dispositif d'analyse de l'invention ;
[Fig. 4] La figure 4 représente un schéma synoptique des différentes étapes du procédé de retaillage de l'invention ;
[Fig. 5a] La figure 5a représente une première scène d'une cinématique du traitement de la surface de roulage d'une roue avec le premier mode de réalisation du système de retaillage de l'invention ;
[Fig. 5b] La figure 5b représente une deuxième scène d'une cinématique du traitement de la surface de roulage d'une roue avec le premier mode de réalisation du système de retaillage de l'invention ;
[Fig. 5c] La figure 5c représente une troisième scène d'une cinématique du traitement de la surface de roulage d'une roue avec le premier mode de réalisation du système de retaillage de l'invention.

### DESCRIPTION DETAILLEE DE L'INVENTION

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement deux modes de réalisation de l'objet de l'invention mais qu'il peut exister d'autres modes de réalisation qui répondent à la définition de l'invention.

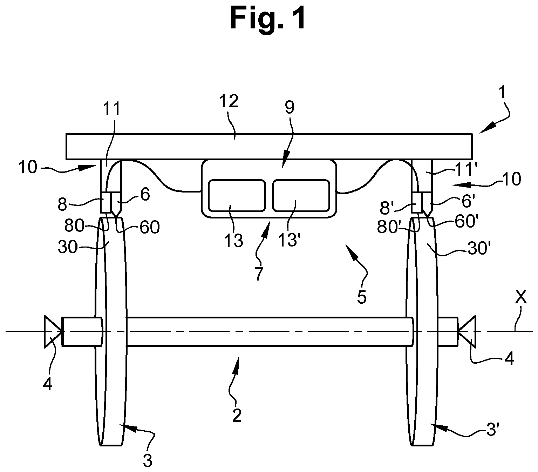

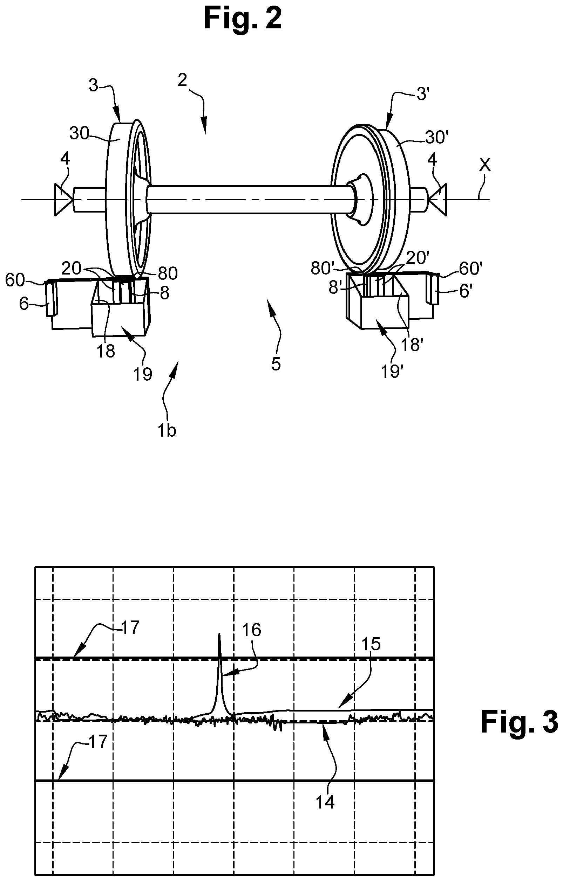

En référence aux figures 1 et 2, le système de retaillage 1, 1b selon l'invention est du type tour de profilage, agencé pour la maintenance des essieux 2 des matériels roulants ferroviaires. En particulier, le système de retaillage 1, 1b permet de réaliser des opérations de retaillage au moins de la surface de roulage 30, 30' des roues coaxiales 3, 3' d'un même essieu 2, de manière à en supprimer les défauts ponctuels.

On définit par « surface de roulage 30, 30' » la surface de la roue 3, 3' qui est agencée pour être au contact des rails lorsque l'essieu 2 est monté sur le matériel ferroviaire roulant correspondant. Dans la suite de la description, on parlera du retaillage et de la détermination de profil 14 (référencé en figure 3) de la surface de roulage 30, 30', étant entendu que le système de retaillage 1, 1b de l'invention est en mesure de retailler et de déterminer le profil 14 de l'ensemble de la surface cylindrique de la roue 3, 3'.

Le système de retaillage 1, 1b comprend un bâti fixe 12, prévu pour supporter les différents éléments composant ledit système de retaillage 1, 1b. Le système de retaillage 1, 1b comprend en outre des moyens de mise en rotation 4 de l'essieu 2, par exemple des vireurs automatiques 4 pilotés par des moyens de traitement et de commande, autour de l'axe X dudit essieu 2, lequel axe X forme également axe de rotation des deux roues 3, 3' de l'essieu 2.

Selon l'invention, le système de retaillage comprend des moyens de maintenance 5 comportant au moins un outil de retaillage 6, 6', lequel outil de retaillage 6, 6' comporte au moins une pointe dure permettant de retailler la surface de roulage 30, 30' par enlèvement de matière de la roue considérée 3, 3'. Une telle pointe dure 6, 6' est par exemple réalisée en carbure de tungstène, qui est un matériau plus dur que le matériau formant les roues 3, 3' de l'essieu 2, lesquelles roues 3, 3' sont typiquement en acier. De manière connue, l'outil de retaillage 6, 6' est adapté pour retailler la surface de roulage 30, 30' lorsque la roue 3, 3' est en rotation autour de son axe X, typiquement à une vitesse angulaire de l'ordre de 400 millimètres par seconde au niveau de la surface de roulage 30, 30'.

Les moyens de maintenance 5 comprennent en outre au moins un dispositif d'analyse 7 de la surface de roulage 30, 30', adapté pour déterminer le profil 14 au moins de la surface de roulage 30, 30' de la roue 3, 3' en rotation. De manière préférentielle, ce dispositif d'analyse 7 est du type sans contact, et comprend au moins une sonde ponctuelle à courants induits 8, 8' de type courants de Foucault reliée à un appareil 9 solidaire du bâti 12 et générant de tels courant induits. La sonde ponctuelle 8, 8', ou sonde « crayon » est disposée en vis-à-vis de la surface de roulage 30, 30' de la roue considérée 3, 3', et est adaptée pour mesurer de manière continue et sans contact la distance entre l'extrémité de mesure 80, 80' de la sonde ponctuelle 8, 8' et la surface de roulage 30, 30' de la roue considérée 3, 3'.

Afin de traiter simultanément les deux roues 3, 3' d'un même essieu 2 monté sur les vireurs 4 du système de retaillage 1, 1b, les moyens de maintenance 5 comprennent des première 6 et seconde 6' pointes au carbure de tungstène et des première 8 et seconde 8' sondes à courants de Foucault reliées à l'appareil de génération de courants de Foucault 9. Ainsi, chaque sonde ponctuelle 8, 8' et chaque pointe au carbure de tungstène 6, 6' est adaptée pour traiter l'une des deux roues 3, 3' de l'essieu 2. Dans la suite de la description, on parlera de la première roue 3 et de la seconde roue 3' de l'essieu 2, la première roue 3 étant prévue pour être traitée par la première sonde ponctuelle 8 et la première pointe au carbure de tungstène 6, tandis que la seconde roue 3' est prévue pour être traitée par la seconde sonde ponctuelle 8' et la seconde pointe au carbure de tungstène 6'.

Afin que les moyens de maintenance 5 puissent traiter toute la surface de roulage 30, 30' de la roue considérée 3, 3', ces derniers sont solidarisés à des moyens de déplacement 10 montés à translation sur le bâti. Ces moyens de déplacement 10 sont agencés pour se déplacer selon une direction parallèle à l'axe X des roues 3, 3'.

Plus particulièrement, les moyens de déplacement 10 comprennent des premier 11 et second 11' organes de déplacement adaptés pour se déplacer en translation parallèlement à l'axe X des roues 3, 3'. La première sonde ponctuelle 8 et la première pointe au carbure de tungstène 6 sont solidarisées au premier organe de déplacement 11, tandis que la seconde sonde ponctuelle 8' et la seconde pointe au carbure de tungstène 6' sont solidarisées au second organe de déplacement 11'.

La sonde ponctuelle 8, 8' et la pointe au carbure de tungstène 6, 6' sont montées sur un même organe de déplacement 11, 11'.

Selon un premier mode de réalisation représenté sur la figure 1, la sonde ponctuelle 8, 8' et la pointe au carbure de tungstène 6, 6' sont juxtaposées selon un axe parallèle à l'axe X de roue 3, 3'. Plus précisément, la pointe 6, 6' et la sonde 8, 8' d'un même organe de déplacement 11, 11' sont configurées pour que la sonde 8, 8' détermine le profil 14 de la surface de roulage 30, 30' préalablement retaillée par la pointe 6, 6'. Au surplus, la pointe 6, 6' et la sonde 8, 8' sont configurées de sorte que ladite sonde 8, 8' détermine le profil d'une première portion de la surface de roulage 30, 30' retaillée, tandis que la pointe 6, 6' retaille de manière concomitante une seconde portion adjacente à la première portion de la surface de roulage 30, 30'.

Selon un second mode de réalisation qui ne correspond pas à l'invention et qui est représenté sur la figure 2, la sonde ponctuelle 8, 8' et la pointe au carbure de tungstène 6, 6' sont espacées et séparées par une cloison 18, 18' qui s'étend dans un plan perpendiculaire à l'axe de roue X. Typiquement, chaque sonde ponctuelle 8, 8' est disposée dans une boite de mesure 19, 19' solidaire de l'organe de déplacement considéré 11, 11', et est le cas échéant juxtaposée avec d'autres outils de mesure 20, 20' prévus pour être disposés en vis-à-vis de la surface de roulage 30, 30' de la roue considérée 3, 3'.

Dans ce second mode de réalisation, la pointe 6, 6' du système de retaillage 1b est configurée pour retailler dans un premier temps au moins une partie de la surface de roulage 30, 30' de la roue considérée 3, 3', puis le dispositif d'analyse 7 est configuré pour déterminer le profil d'au moins la partie de ladite surface de roulage 30, 30' préalablement retaillée. En outre, grâce à la cloison 18, 18', la tête de mesure 80, 80' de la sonde ponctuelle 8, 8' est protégée des copeaux métalliques générés par le retaillage de la surface de roulage 30, 30' par la pointe au carbure de tungstène 6, 6' considérée.

De manière avantageuse, les deux organes de déplacement 11, 11' et les moyens de maintenance 5 sont configurés pour traiter en même temps la première roue et la seconde roue 3, 3' de l'essieu 2.

Enfin, le système de retaillage 1, 1b comprend des moyens de commande et de traitement agencés pour commander les moyens de déplacement 10 et les moyens de maintenance 5. Ces moyens de commande et traitement dénommés dans la suite de la description « moyens de traitement », comprennent classiquement au moins une unité de calcul du type processeur, et un espace mémoire de type connu. Les moyens de traitement sont donc informatiquement reliés aux sondes à courants de Foucault 8, 8', aux organes de déplacement 11, 11', à l'appareil 9 générant les courants de Foucault et aux moyens 4 de mise en rotation de l'essieu 2.

Les moyens de traitement sont en outre configurés pour analyser simultanément les profils déterminés 14 des deux roues 3, 3' par les moyens de maintenance 5, et pour les comparer avec un profil seuil (non représenté) dont les caractéristiques sont enregistrées dans l'espace mémoire des moyens de traitement. Comme représenté sur la figure 3, cette comparaison est réalisée par la détermination des écarts 15, 16 existant entre les profils déterminés 14 et le profil seuil. Ces écarts 15, 16 sont représentés sous la forme d'une courbe sur la figure 3. Si au moins un écart déterminé 16 par les moyens de traitement est supérieur à un écart seuil 17, cela signifie qu'il subsiste au moins un défaut sur la surface de roulage 30, 30' de la ou des roues considérées 3, 3'. Les moyens de traitement commandent alors une opération de maintenance supplémentaire de la surface de roulage 30, 30' de la ou des roues considérées 3, 3' dont le profil 14 présente un écart 16 supérieur à l'écart seuil 17.

Le système de retaillage 1 peut également comprendre au moins un dispositif d'alarme 13, 13' qui se déclenche lorsqu'un écart déterminé 16 sur au moins l'un des profils déterminés est supérieur à l'écart seuil 17. De manière avantageuse, le dispositif d'alarme 13, 13' permet d'indiquer quelle roue 3, 3' présente une surface de roulage 30, 30' sur laquelle au moins un défaut est toujours présent, et pour chaque roue 3, 3', le nombre d'écarts 16 supérieurs à l'écart seuil 17. Préférentiellement, le système de retaillage 1 comprend deux dispositifs d'alarme 13, 13' respectivement reliés aux première 8 et seconde 8' sondes à courants de Foucault.

Le dispositif d'alarme considéré 13, 13' peut par exemple envoyer un signal sonore ou lumineux à chaque défaut détecté, l'intensité du signal sonore ou lumineux pouvant être proportionnel à l'amplitude de la différence entre l'écart déterminé 16 et l'écart seuil 17.

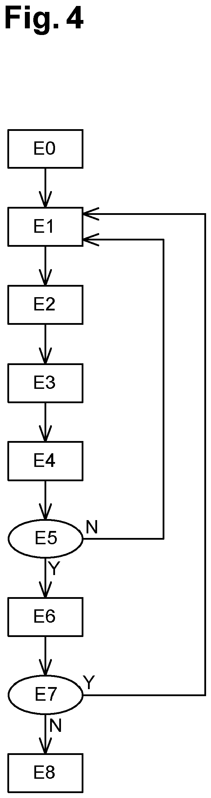

Cette comparaison et la détermination de l'écart 15, 16 entre chaque profil déterminé 14 et le profil seuil vont être décrites plus précisément dans ce qui suit, en liaison avec un procédé de retaillage dans un premier lieu selon le premier mode de réalisation du système de retaillage 1, puis dans un second lieu et en référence à la figure 4 selon le second mode de réalisation du système de retaillage 1b.

Au cours d'une première étape E1 du procédé de retaillage mis en oeuvre par le système de retaillage 1, 1b quel que soit le mode de réalisation, laquelle étape E1 fait suite à l'installation sur le système de retaillage 1, 1b de l'essieu 2 nécessitant une maintenance, les moyens de traitement commandent les moyens 4 de mise en rotation des roues 3, 3' de sorte que lesdites roues 3, 3' tournent autour de leur axe X à une vitesse angulaire constante, de l'ordre de 400 millimètres par seconde au niveau de leurs surfaces de roulage 30, 30'.

En cas de besoin, les moyens de traitement commandent le déplacement des deux organes de déplacement 11, 11' de sorte que chaque pointe au carbure de tungstène 6, 6' soit positionnée à une première extrémité axiale 31 de la surface de roulage 30, 30' de la roue considérée 3, 3', en vis-à-vis de ladite surface de roulage 30, 30'.

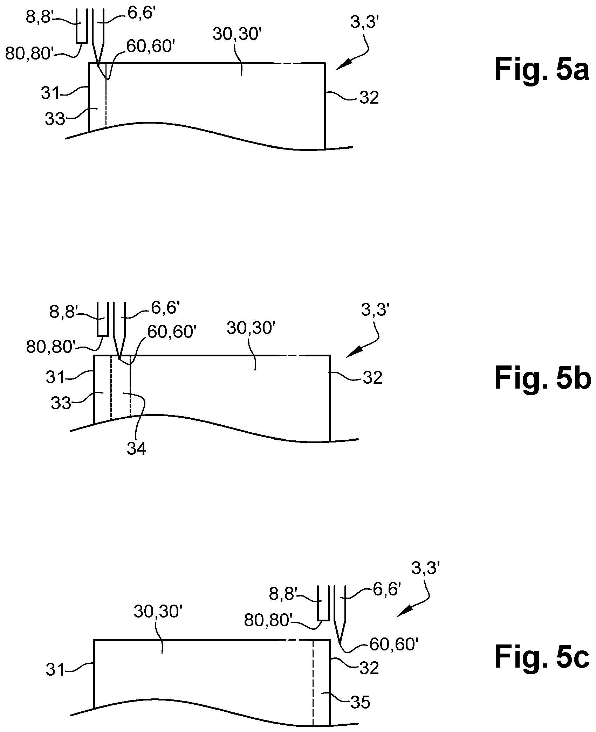

Au cours d'une deuxième étape E2 mis en oeuvre par le système de retaillage 1, 1b quel que soit le mode de réalisation, les moyens de traitement commandent l'abaissement des organes de déplacement 11, 11' selon une direction perpendiculaire à l'axe X de roues 3, 3' vers les surfaces de roulage 30, 30' des roues respectives 3, 3'. Cet abaissement est réalisé de sorte que les extrémités 60, 60' des pointes au carbure de tungstène 6, 6' pénètrent dans la masse des roues respectives 3, 3' selon une épaisseur déterminée, par exemple 0,5 millimètres. Les roues 3, 3' étant en rotation, l'extrémité 60, 60' de chaque pointe au carbure de tungstène 8, 8' retaille une première portion 33 de la surface de roulage 30, 30' de la roue considérée 3, 3' par enlèvement de matière, comme représenté sur la figure 5a. A ce stade, dans le cadre du premier mode de réalisation du système de retaillage 1, la sonde 8, 8' n'est pas encore en vis-à-vis de la surface de roulage 30, 30' de la roue considérée 3, 3'.

Au cours d'une troisième étape E3 mis en oeuvre par le système de retaillage 1, 1b quel que soit le mode de réalisation, dès que les roues 3, 3' ont effectué un tour complet, les moyens de traitement commande la translation concomitante des organes de déplacement 11, 11' d'une distance prédéterminée, par exemple 1 millimètre, parallèlement à l'axe X des roues 3, 3' et en direction d'une seconde extrémité axiale 32 opposée à la première extrémité axiale 31 des surfaces de roulage 30, 30' des roues respectives 3, 3'.

La vitesse de rotation et la circonférence des roues 3, 3' étant connues, les moyens de traitement sont aptes à déterminer le temps au bout duquel lesdites roues 3, 3' ont réalisé un tour complet, ce temps étant obtenu par un simple calcul, en divisant la valeur de la circonférence des roues 3, 3' par la vitesse de rotation desdites roues 3, 3'.

Les quatrième et cinquième étapes diffèrent selon que le système de retaillage 1, 1b est réalisé selon le premier ou le second mode de réalisation. On décrit ces étapes en premier lieu en relation avec le premier mode de réalisation du système de retaillage 1.

Au cours d'une quatrième étape selon le premier mode de réalisation et conformément à la figure 5b, chaque pointe au carbure de tungstène 6, 6' retaille par enlèvement de matière une seconde portion 34 de la surface de roulage 30, 30' de la roue considérée 3, 3', adjacente à la première portion 33. Concomitamment au retaillage de la seconde portion, chaque sonde à courant de Foucault 8, 8' détermine le profil de la première portion 33 de la surface de roulage 30, 30' de la roue considérée 3, 3' qui a été retaillée à la deuxième étape E2.

Pour déterminer le profil de cette première portion, les moyens de traitement mesurent en continu la distance entre l'extrémité de mesure 80, 80' de la sonde ponctuelle 8, 8' et la surface de roulage 30, 30' en vis-à-vis. Ainsi, comme illustré sur la figure 3, le profil de la première portion est une courbe représentant la distance entre l'extrémité de mesure 80, 80' de la sonde 8, 8' et une pluralité de points de cette première portion successivement en vis-à-vis de ladite extrémité 80, 80' de la sonde 8, 8', ces points étant répartie de manière uniforme sur la circonférence de la roue considérée 3, 3' au niveau de cette première portion.

Au cours d'une cinquième étape selon le premier mode de réalisation, les moyens de traitement déterminent, par identification de la position des moyens de déplacement 10, si toute la surface de roulage 30, 30' des roues 3, 3' a été retaillé et profilée. Si ce n'est pas le cas, les deuxième E2, troisième E3 et quatrième E4 étapes sont répétées jusqu'à ce que chaque sonde 8, 8' ait déterminé le profil de la dernière portion 35 adjacente à la seconde extrémité axiale 32 de la surface de roulage 30, 30' de la roue considérée 3, 3'. La figure 5c illustre ce dernier stade, pour lequel la pointe au carbure de tungstène 6, 6' n'est plus en vis-à-vis de la surface de roulage 30, 30' alors que la sonde 8, 8' est en vis-à-vis de la dernière portion 35. L'ensemble des portions successives entre les première et seconde extrémités axiales 31, 32 des surfaces de roulage 30, 30' sont ainsi retaillées et ont chacune leur profil déterminé.

Une fois les surfaces de roulage 30, 30' des deux roues 3, 3' traitées par les moyens de maintenance 5, les moyens de traitement déterminent ainsi le profil complet 14 de la surface de roulage 30, 30' retaillée de chaque roue 3, 3'. En d'autres termes, le profil complet 14 de la surface de roulage 30, 30' de la roue considérée 3, 3' est une succession des profils des portions successives de ladite surface de roulage 30, 30' mis bout à bout, chaque profil de la nième portion représentant la distance entre l'extrémité de mesure 80, 80' de la sonde considérée 8, 8' et une pluralité de points de cette nième portion successivement en vis-à-vis de ladite extrémité 80, 80' de la sonde 8, 8', ces points étant répartis de manière uniforme sur la circonférence de la roue considérée 3, 3' au niveau de cette nième portion.

Comme indiqué ci-dessus, les quatrième et cinquième étapes sont différentes lorsqu'elles sont mises en oeuvre par le système de retaillage 1b selon le second mode de réalisation. Ces étapes E4 et E5 vont maintenant être décrites.

Au cours d'une quatrième étape E4 selon le second mode de réalisation de l'invention, les moyens de traitement déterminent, par identification de la position des moyens de déplacement 10, si toute la surface de roulage 30, 30' des roues 3, 3' a été retaillé. Si ce n'est pas le cas, la troisième étape E3 est répétée jusqu'à ce que chaque pointe au carbure de tungstène 6, 6' ait retaillé la dernière portion 35 adjacente à la seconde extrémité axiale 32 de la surface de roulage 30, 30' de la roue considérée 3, 3'. L'ensemble des portions successives entre les première et seconde extrémités axiales 31, 32 des surfaces de roulage 30, 30' sont ainsi retaillées.

Au cours d'une cinquième étape E5, les moyens de traitement commandent la translation des moyens de maintenance 5 parallèlement à l'axe de la roue X, depuis la seconde extrémité axiale 32 jusqu'à la première extrémité axiale 31 opposée de la roue considérée 30, 30'. Concomitamment à cette translation, chaque sonde à courant de Foucault 8, 8' détermine le profil de la surface de roulage 30, 30' de la roue considérée 3, 3' qui a été retaillée au cours des étapes précédentes.

Les étapes suivantes du procédé sont identiques, quel que soit le mode de réalisation de l'invention.

Au cours d'une sixième étape E6, les moyens de traitement déterminent les écarts 15, 16 entre le profil 14 de chaque roue 3, 3' déterminé à l'étape précédente E5 et un profil seuil enregistré dans l'espace mémoire des moyens de traitement. Pour déterminer ces écarts 15, 16, les moyens de traitements comparent, pour l'ensemble des portions de la surface de roulage 30, 30' des roues considérées 3, 3', les valeurs de distance déterminées aux étapes précédentes avec une valeur de distance seuil enregistrée dans l'espace mémoire des moyens de traitement.

Au cours d'une septième étape E7, les moyens de traitement comparent ces écarts déterminés 15, 16, c'est à dire la différence entre l'ensemble des valeurs de distance acquises et la distance seuil, avec l'écart seuil 17. Lorsque au moins un écart déterminé 16 est supérieur à l'écart seuil 17, les moyens de traitement en déduise qu'au moins un défaut subsiste sur la surface de roulage 30, 30' d'au moins une roue 3, 3'. Les moyens de traitement commandent d'une part le déplacement des organes de déplacement 11, 11' de sorte que chaque pointe au carbure de tungstène 6, 6' soit repositionnée en vis-à-vis de la première extrémité axiale de la surface de roulage 30, 30' de la roue considérée 3, 3', et d'autre part la répétition du procédé de retaillage à partir de la deuxième étape E2.

Cela se traduit concrètement par une opération de retaillage supplémentaire de la surface de roulage 30, 30' des roues 3, 3' et une nouvelle détermination du profil 14 des surfaces de roulage 30, 30' retaillées des roues respectives 3, 3'. Ces étapes E2 à E7 sont répétées tant que les moyens de traitement détectent un défaut dans la surface de roulage 30, 30' d'au moins l'une des deux roues 3, 3'. Si aucun défaut n'est détecté, les moyens de traitement commandent au cours de la dernière étape E8 l'arrêt des moyens de mise en rotation 4 et l'éloignement des organes de déplacement 11, 11' des surfaces de roulage respectives 30, 30'. L'essieu 2 est prêt pour récupération et installation sur le matériel roulant ferroviaire.

Avantageusement, les moyens de traitement déterminent la position et le nombre de défauts sur la ou les surfaces de roulage 30, 30', puisque les mesures effectuées par les sondes à courants de Foucault 8, 8' permettent aux moyens de traitement de déterminer quel(s) point(s) sur la surface de roulage 30, 30' est à une distance de l'extrémité 80, 80' de la sonde ponctuelle 8, 8' supérieure à la distance seuil. En outre, les moyens de traitement sont en mesure de déterminer sur quelle(s) roue(s) 3, 3' les défauts identifiés sont présents.

De manière optionnelle, les moyens de traitement peuvent déclencher les dispositifs d'alarme 13, 13' lorsqu'ils détectent un défaut. Cette alarme peut être un signal sonore ou lumineux. Avantageusement, l'intensité de ce signal sonore ou lumineux est d'autant plus élevée que le défaut est important, c'est-à-dire que la différence entre l'écart déterminé 16 et l'écart seuil est importante.

Il est bien entendu que les opérations de retaillage par les pointes au carbure de tungstène 6, 6' sont réalisées simultanément sur les deux roues 3, 3' de l'essieu 2, quel que soit le mode de réalisation de l'invention. De la même manière, les opérations permettant de déterminer le profil 14 des surfaces de roulage 30, 30 par les sondes à courant de Foucault 8, 8' sont réalisées simultanément sur les deux roues 3, 3' de l'essieu 2.

Enfin, préalablement à la première étape E1 du procédé de retaillage (quel que soit le mode de réalisation de l'invention), ce dernier peut comprendre une étape d'étalonnage E0 du dispositif d'analyse 7.

Pour ce faire, une pièce de référence (non représentée) comprenant des défauts calibrés est utilisée. Cette pièce de référence est une plaque dont les deux faces opposées comprennent les défauts calibrés.

Sur la première face, la plaque comprend une pluralité de fissures de longueurs et profondeurs connues. A titre d'exemple, la première face comprend quinze fissures réparties en trois groupes : cinq fissures de deux millimètres de longueur, cinq fissures de trois millimètres de longueur et cinq fissures de cinq millimètres de longueur. Pour chaque groupe, chacune des cinq fissures présente une profondeur différente, respectivement 0.1, 0.3, 0.5, 0.8 et 1 millimètre de profondeur. Ainsi, chaque fissure de la première face est unique. En outre, les fissures d'un même groupe sont régulièrement espacées selon une première direction, et les fissures de deux groupes sont régulièrement espacées selon une seconde direction perpendiculaire à la première direction.

Sur la seconde face, la plaque comprend une pluralité de rainures parallèles entre-elles et régulièrement espacées. Préférentiellement, ces rainures s'étendent selon une direction sur toute la largeur de la plaque. Chaque rainure présente une profondeur différente, respectivement 0.1, 0.3, 0.5, 0.8 et 1 millimètre.

Ces rainures et fissures sont réalisées de manière connue, par exemple par électroérosion.

Au cours de l'étape d'étalonnage E0, les sondes à courants de Foucault 8, 8' devant être étalonnées sont solidarisées à un châssis (non représenté) et positionnées en vis-à-vis de l'une des faces de la plaque. La plaque ou les sondes 8, 8' sont montées sur un dispositif de déplacement de sorte qu'un déplacement relatif en translation des sondes 8, 8' par rapport à la plaque existe. Chaque sonde 8, 8' peut donc parcourir la surface en vis-à-vis de la plaque tandis que la distance entre l'extrémité de mesure 80, 80' de la sonde 8, 8' et la surface de la plaque reste constante.

Pour rappel, les sondes à courants de Foucault 8, 8' mesurent des courants induits dans le matériau de la roue considérée 3, 3', ces courants induits étant générés par l'appareil 9 relié aux sondes 8, 8'. Ces courants induits circulent localement dans le matériau formant les roues 3, 3' et ont une distribution et une répartition qui dépendent du champ magnétique d'excitation, de la géométrie et des caractéristiques de conductivité électrique et de perméabilité magnétique des roues examinées 3, 3'

En présence d'un défaut dans la roue contrôlée 3, 3', le déplacement des courants induits est perturbé, entraînant ainsi une variation de l'impédance apparente de la sonde 8, 8' qui dépend de la nature du défaut et de sa dimension notamment volumique.

C'est l'analyse de cette variation d'impédance qui fournit les indications exploitables pour effectuer le contrôle de la surface de roulage 30, 30'. L'interprétation des signaux recueillis s'effectue par comparaison de ceux relevés dans les roues contrôlées 3, 3' avec ceux de la pièce de référence, comportant des défauts calibrés et représentatifs des phénomènes recherchés.

Ainsi, lorsque l'extrémité de mesure 80, 80' de la sonde 8, 8' passe en vis-à-vis d'une fissure ou d'une rainure de la pièce de référence, un écart de mesure d'impédance est déterminé par les moyens de traitement. Les dimensions de la fissure ou rainure étant connues, l'utilisateur peut associer une variation d'impédance avec une longueur, une largeur et une profondeur connues. Il est ainsi possible d'associer une variation d'impédance à un défaut volumétrique. Cet étalonnage permettra in fine d'associer les variations d'impédance mesurées au niveau des surfaces de roulage 30, 30' avec des défauts de ladite surface de roulage 30, 30', et de déterminer les dimensions et le type de défaut détecté.

Pour augmenter la fiabilité de l'étalonnage, plusieurs mesures sur plusieurs fissures et rainures sont réalisées selon une méthode d'étalonnage connue.

Le système 1 et le procédé de retaillage de l'invention permettent donc d'assurer la maintenance des roues 3, 3' des essieux 2 des matériels roulants ferroviaires, en s'assurant que les roues 3, 3' ont été retaillées au juste nécessaire en fonction de la nature et des dimensions des défauts déterminés, et non pas selon un choix arbitraire qui se traduit souvent par un retaillage par excès des roues 3, 3'. De la sorte, l'enlèvement de matière des roues 3, 3' traitées par le système de retaillage 1 de l'invention est limité au juste nécessaire, ce qui a pour effet direct d'optimiser la durée de vie desdites roues 3, 3'.

## Revendications

1. Système de retaillage (1, 1b) du type tour d'au moins une partie de la surface, dite surface de roulage (30), d'au moins une roue (3, 3'), comprenant des moyens (4) adaptés pour mettre en rotation la roue (3, 3') à retailler autour de son axe (X), des moyens de maintenance (5) comportant au moins un outil de retaillage (6, 6') adapté pour retailler au moins la surface de roulage (30, 30') de la roue (3, 3') mise en rotation et au moins un dispositif d'analyse (7) adapté pour déterminer le profil au moins de la surface de roulage (30, 30') de la roue (3, 3') en rotation, et des moyens de déplacement (10) des moyens de maintenance (5) selon l'axe de roue (X) pour traiter au moins la surface de roulage (30, 30') de la roue associée (3,3'), **caractérisé en ce que** le dispositif d'analyse (7) est configuré pour déterminer au moins le profil (14) de la surface de roulage (30, 30') préalablement retaillée par l'outil de retaillage (6, 6'), **en ce que** le système de retaillage (1, 1b) comprend des moyens de traitement configurés pour déterminer un écart (15, 16) entre le profil (14) de la surface de roulage (30, 30') retaillée et un profil seuil, et pour commander un traitement supplémentaire de la surface de roulage (30, 30') par les moyens de maintenance (5) si l'écart déterminé (15, 16) est supérieur à un écart seuil (17) et **en ce que** les moyens de maintenance (5) sont configurés pour déterminer le profil (14) d'une première portion de la surface de roulage (30, 30') préalablement retaillée par lesdits moyens de maintenance (5), pendant que ces derniers retaillent une seconde portion de la surface de roulage (30, 30').

2. Système (1, 1b) selon la revendication précédente, **caractérisé en ce que** les moyens de maintenance (5) sont configurés pour traiter simultanément les deux roues (3, 3') d'un essieu (2).

3. Système (1, 1b) selon l'une quelconque des revendications précédentes, **caractérisé en ce que** le dispositif d'analyse (7) comprend au moins une sonde ponctuelle à courants induits du type courants de Foucault (8, 8') et un appareil (9) générant de tels courants induits qui est relié à ladite sonde (8, 8'), laquelle sonde (8, 8') est adaptée pour mesurer de manière continue et sans contact au moins la distance entre l'extrémité de mesure (80, 80') de la sonde (8, 8') en vis-à-vis de la surface de roulage (30, 30') et la surface de roulage (30, 30') de la roue considérée (3, 3').

4. Système (1b) selon la revendication précédente, **caractérisé en ce que** la sonde (8, 8') du dispositif d'analyse (7) et l'outil de retaillage (6, 6') sont séparés par au moins une cloison perpendiculaire à l'axe de roue (X) de manière à protéger ladite sonde (8, 8').

5. Système (1, 1b) selon l'une quelconque des revendications précédentes, **caractérisé en ce que** l'outil de retaillage (6, 6') comprend au moins une pointe au carbure de tungstène adaptée pour retailler la surface de roulage (30, 30') par enlèvement de matière de la roue considérée (3, 3').

6. Procédé de retaillage d'au moins une partie de la surface, dite surface de roulage (30, 30'), d'au moins une roue (3, 3') avec un système de retaillage (1, 1b) selon l'une quelconque des revendications précédentes, comprenant les étapes successives de :
i. Mise en rotation (E1) de la roue (3, 3') à retailler et positionnement de l'outil de retaillage (6, 6') à une première extrémité axiale (31) de la surface de roulage (30, 30') à retailler ;
ii. Retaillage (E2) d'une première portion (33) de la surface de roulage (30, 30') par l'outil de retaillage (6, 6'), au niveau de la première extrémité axiale (31) de ladite surface de roulage (30, 30') ;
iii. Translation (E3) des moyens de maintenance (5) d'une distance prédéterminée parallèlement à l'axe de la roue (X) en direction d'une seconde extrémité axiale opposée (32) de la surface de roulage (30, 30'), de manière à retailler une seconde portion (34) de la surface de roulage (30, 30') adjacente à la première portion (33) par l'outil de retaillage (6, 6') ;
iv. Répétition (E4) de l'étape iii (E3) jusqu'au retaillage d'une dernière portion (35) de la surface de roulage (30, 30') adjacente à la seconde extrémité axiale (32), de manière à retailler toute la surface de roulage (30, 30') ;
v. Translation (E5) des moyens de maintenance (5) parallèlement à l'axe de la roue (X) en direction de la première extrémité axiale (31) de la surface de roulage (30, 30') et détermination concomitante du profil (14) de ladite surface de roulage (30, 30') par le dispositif d'analyse (7) ;
vi. Détermination (E6) par les moyens de traitement d'au moins un écart (15, 16) entre le profil (14) déterminé à l'étape v et un profil seuil ;
vii. Tant que l'écart déterminé (15, 16) est supérieur à un écart seuil (17), répétition (E7) des étapes ii à vi ;
viii. Lorsqu'aucun écart déterminé (15) n'est supérieur à l'écart seuil (17), dégagement (E8) de l'outil de retaillage (6, 6') de la surface de roulage (30, 30') et arrêt de la rotation de la roue (3, 3').

7. Procédé selon la revendication précédente, **caractérisé en ce que** la détermination (E5) du profil (14) comprend la mesure en continue, par une sonde à courants induits (8, 8') du type courants de Foucault formant partie du dispositif d'analyse (7), de la distance (15, 16) séparant la surface de roulage (30, 30') de l'extrémité de mesure (80, 80') de la sonde (8, 8') en vis-à-vis de ladite surface de roulage (30, 30').

8. Procédé selon la revendication précédente, **caractérisé en ce que** l'étape vi (E6) comprend les sous-étapes successives de :
i. Comparaison des données de distance obtenues avec une valeur de distance seuil ;
ii. Lorsque la différence entre au moins une donnée de distance et la distance seuil est supérieure à l'écart seuil (17), déclenchement d'un dispositif d'alarme (13, 13') par les moyens de traitement, indiquant la subsistance d'un défaut présent au moins sur la surface de roulage (30, 30').

9. Procédé selon la revendication précédente, **caractérisé en ce qu'**il comprend une étape préalable d'étalonnage (E0) du dispositif d'analyse (7).

## Patentansprüche

1. System (1, 1b) vom Typ Drehmaschine zum Nachschneiden mindestens eines Teils der Lauffläche (30) genannten Fläche mindestens eines Rads (3, 3'), das Einrichtungen (4), die geeignet sind, das nachzuschneidende Rad (3, 3') um seine Achse (X) in Drehung zu versetzen, Instandhaltungseinrichtungen (5), die mindestens ein Nachschneidewerkzeug (6, 6'), das geeignet ist, mindestens die Lauffläche (30, 30') des in Drehung versetzten Rads (3, 3') nachzuschneiden, und mindestens eine Analysevorrichtung (7) aufweisen, die geeignet ist, das Profil mindestens der Lauffläche (30, 30') des drehenden Rads (3, 3') zu bestimmen, und Verschiebeeinrichtungen (10) der Instandhaltungseinrichtungen (5) gemäß der Radachse (X) enthält, um mindestens die Lauffläche (30, 30') des zugeordneten Rads (3, 3') zu bearbeiten, **dadurch gekennzeichnet, dass** die Analysevorrichtung (7) konfiguriert ist, mindestens das Profil (14) der vorher durch das Nachschneidewerkzeug (6, 6') nachgeschnittenen Lauffläche (30, 30') zu bestimmen, dass das Nachschneidesystem (1, 1b) Bearbeitungseinrichtungen enthält, die konfiguriert sind, eine Abweichung (15, 16) zwischen dem Profil (14) der nachgeschnittenen Lauffläche (30, 30') und einem Schwellenprofil zu bestimmen und eine zusätzliche Bearbeitung der Lauffläche (30, 30') durch die Instandhaltungseinrichtungen (5) zu steuern, wenn die bestimmte Abweichung (15, 16) größer ist als eine Schwellenabweichung (17), und dass die Instandhaltungseinrichtungen (5) konfiguriert sind, das Profil (14) eines vorher von den Instandhaltungseinrichtungen (5) nachgeschnittenen ersten Abschnitts der Lauffläche (30, 30') zu bestimmen, während diese letzteren einen zweiten Abschnitt der Lauffläche (30, 30') nachschneiden.

2. System (1, 1b) nach dem vorhergehenden Anspruch, **dadurch gekennzeichnet, dass** die Instandhaltungseinrichtungen (5) konfiguriert sind, die zwei Räder (3, 3') einer Radachse (2) gleichzeitig zu bearbeiten.

3. System (1, 1b) nach einem der vorhergehenden Ansprüche, **dadurch gekennzeichnet, dass** die Analysevorrichtung (7) mindestens eine Punktsonde mit Induktionsströmen vom Typ Wirbelströme (8, 8') und ein solche Induktionsströme erzeugendes Gerät enthält, das mit der Sonde (8, 8') verbunden ist, wobei die Sonde (8, 8') geeignet ist, kontinuierlich und kontaktlos mindestens den Abstand zwischen dem Messende (80, 80') der Sonde (8, 8') gegenüber der Lauffläche (30, 30') und der Lauffläche (30, 30') des betrachteten Rads (3, 3') zu messen.

4. System (1b) nach dem vorhergehenden Anspruch, **dadurch gekennzeichnet, dass** die Sonde (8, 8') der Analysevorrichtung (7) und das Nachschneidewerkzeug (6, 6') durch mindestens eine Trennwand lotrecht zur Radachse (X) getrennt sind, um die Sonde (8, 8') zu schützen.

5. System (1, 1b) nach einem der vorhergehenden Ansprüche, **dadurch gekennzeichnet, dass** das Nachschneidewerkzeug (6, 6') mindestens eine Wolframkarbidspitze enthält, die geeignet ist, die Lauffläche (30, 30') durch Entfernen von Material vom betrachteten Rad (3, 3') nachzuschneiden.

6. Verfahren zum Nachschneiden mindestens eines Teils der Lauffläche (30, 30') genannten Fläche mindestens eines Rads (3, 3') mit einem Nachschneidesystem (1, 1b) nach einem der vorhergehenden Ansprüche, das die aufeinanderfolgenden Schritte enthält:
i. Indrehungversetzen (E1) des nachzuschneidenden Rads (3, 3') und Positionierung des Nachschneidewerkzeugs (6, 6') an einem ersten axialen Ende (31) der nachzuschneidenden Lauffläche (30, 30');
ii. Nachschneiden (E2) eines ersten Abschnitts (33) der Lauffläche (30, 30') durch das Nachschneidewerkzeug (6, 6') im Bereich des ersten axialen Endes (31) der Lauffläche (30, 30');
iii. Translationsverschiebung (E3) der Instandhaltungseinrichtungen (5) um einen vorbestimmten Abstand parallel zur Achse des Rads (X) in Richtung eines gegenüberliegenden zweiten axialen Endes (32) der Lauffläche (30, 30'), um einen an den ersten Abschnitt (33) angrenzenden zweiten Abschnitt (34) der Lauffläche (30, 30') durch das Nachschneidewerkzeug (6, 6') nachzuschneiden;
iv. Wiederholung (E4) des Schritts iii (E3) bis zum Nachschneiden eines an das zweite axiale Ende (32) angrenzenden letzten Abschnitts (35) der Lauffläche (30, 30'), um die ganze Lauffläche (30, 30') nachzuschneiden;
v. Translationsverschiebung (E5) der Instandhaltungseinrichtungen (5) parallel zur Achse des Rads (X) in Richtung des ersten axialen Endes (31) der Lauffläche (30, 30') und gleichzeitige Bestimmung des Profils (14) der Lauffläche (30, 30') durch die Analysevorrichtung (7);
vi. Bestimmung (E6) durch die Bearbeitungseinrichtungen mindestens einer Abweichung (15, 16) zwischen dem im Schritt v bestimmten Profil (14) und einem Schwellenprofil;
vii. so lange die bestimmte Abweichung (15, 16) größer ist als eine Schwellenabweichung (17), Wiederholung (E7) der Schritte ii bis vi;
viii. wenn keine bestimmte Abweichung (15) größer ist als die Schwellenabweichung (17), Lösen (E8) des Nachschneidewerkzeugs (6, 6') von der Lauffläche (30, 30') und Anhalten der Drehung des Rads (3, 3').

7. Verfahren nach dem vorhergehenden Anspruch, **dadurch gekennzeichnet, dass** die Bestimmung (E5) des Profils (14) die kontinuierliche Messung durch eine Sonde mit Induktionsströmen (8, 8') vom Typ Wirbelströme, die Teil der Analysevorrichtung (7) ist, des die Lauffläche (30, 30') vom Messende (80, 80') der Sonde (8, 8') gegenüber der Lauffläche (30, 30') trennenden Abstands (15, 16) enthält.

8. Verfahren nach dem vorhergehenden Anspruch, **dadurch gekennzeichnet, dass** der Schritt vi (E6) die aufeinanderfolgenden Teilschritte enthält:
i. Vergleich der erhaltenen Abstandsdaten mit einem Abstandsschwellwert;
ii. wenn die Differenz zwischen mindestens einem Abstandsdatenwert und dem Schwellenabstand größer ist als die Schwellenabweichung (17), Auslösen einer Alarmvorrichtung (13, 13') durch die Bearbeitungseinrichtungen, die das Weiterbestehen eines auf der Lauffläche (30, 30') vorhandenen Fehlers anzeigt.

9. Verfahren nach dem vorhergehenden Anspruch, **dadurch gekennzeichnet, dass** es einen vorhergehenden Schritt der Kalibrierung (E0) der Analysevorrichtung (7) enthält.

## Claims

1. Resizing system (1, 1b) of the lathe type for resizing at least a part of the surface, referred to as rolling surface (30), of at least one wheel (3, 3'), comprising means (4) designed to set the wheel (3, 3') to be resized in rotation about its axis (X), maintenance means (5) comprising at least one resizing tool (6, 6') designed to resize at least the rolling surface (30, 30') of the wheel (3, 3') set in rotation and at least one analysis device (7) designed to determine the profile at least of the rolling surface (30, 30') of the wheel (3, 3') in rotation, and movement means (10) for moving the maintenance means (5) along the wheel axis (X) so as to treat at least the rolling surface (30, 30') of the associated wheel (3, 3'), wherein the analysis device (7) is configured to determine at least the profile (14) of the rolling surface (30, 30') resized beforehand by the resizing tool (6, 6'), wherein the resizing system (1, 1b) comprises treatment means configured to determine a deviation (15, 16) between the profile (14) of the resized rolling surface (30, 30') and a threshold profile, and to command an additional treatment of the rolling surface (30, 30') by the maintenance means (5) if the determined deviation (15, 16) is greater than a threshold deviation (17), and wherein the maintenance means (5) are configured to determine the profile (14) of a first portion of the rolling surface (30, 30') resized beforehand by said maintenance means (5) while the latter resize a second portion of the rolling surface (30, 30').

2. System (1, 1b) according to the preceding claim, wherein the maintenance means (5) are configured to treat the two wheels (3, 3') of an axle (2) simultaneously.

3. System (1, 1b) according to either one of the preceding claims, wherein the analysis device (7) comprises at least one spot probe with induced currents of the eddy current type (8, 8') and an apparatus (9) generating such induced currents which is connected to said probe (8, 8'), which probe (8, 8') is designed to measure in a continuous and contactless manner at least the distance between the measuring end (80, 80') of the probe (8, 8') facing the rolling surface (30, 30') and the rolling surface (30, 30') of the wheel (3, 3') considered.

4. System (1b) according to the preceding claim, wherein the probe (8, 8') of the analysis device (7) and the resizing tool (6, 6') are separated by at least one partition perpendicular to the wheel axis (X) so as to protect said probe (8, 8').

5. System (1, 1b) according to any one of the preceding claims, wherein the resizing tool (6, 6') comprises at least one tungsten carbide tip designed to resize the rolling surface (30, 30') by removal of material from the wheel (3, 3') considered.

6. Method for resizing at least a part of the surface, referred to as rolling surface (30, 30'), of at least one wheel (3, 3') with a resizing system (1, 1b) according to any one of the preceding claims, comprising the successive steps of:
i. setting (E1) the wheel (3, 3') to be resized in rotation and positioning the resizing tool (6, 6') at a first axial end (31) of the rolling surface (30, 30') to be resized;
ii. resizing (E2) a first portion (33) of the rolling surface (30, 30') by way of the resizing tool (6, 6'), at the first axial end (31) of said rolling surface (30, 30');
iii. moving (E3) the maintenance means (5) in translation by a predetermined distance parallel to the axis (X) of the wheel in the direction of an opposite second axial end (32) of the rolling surface (30, 30'), so as to resize a second portion (34) of the rolling surface (30, 30') adjacent to the first portion (33) by way of the resizing tool (6, 6');
iv. repeating (E4) step iii (E3) until a last portion (35) of the rolling surface (30, 30') adjacent to the second axial end (32) has been resized, so as to resize the entire rolling surface (30, 30');
v. moving (E5) the maintenance means (5) in translation parallel to the axis (X) of the wheel in the direction of the first axial end (31) of the rolling surface (30, 30') and concomitantly determining the profile (14) of said rolling surface (30, 30') by way of the analysis device (7);
vi. determining (E6), by way of the treatment means, at least one deviation (15, 16) between the profile (14) determined in step v and a threshold profile;
vii. as long as the determined deviation (15, 16) is greater than a threshold deviation (17), repeating (E7) steps ii to vi;
viii. when no deviation (15) is greater than the threshold deviation (17), disengaging (E8) the resizing tool (6, 6') from the rolling surface (30, 30') and stopping the rotation of the wheel (3, 3').

7. Method according to the preceding claim, wherein the determination (E5) of the profile (14) comprises the continuous measurement, by a probe with induced currents (8, 8') of the eddy current type forming part of the analysis device (7), of the distance (15, 16) separating the rolling surface (30, 30') from the measuring end (80, 80') of the probe (8, 8') facing said rolling surface (30, 30').

8. Method according to the preceding claim, wherein step vi (E6) comprises the successive sub-steps of:
i. comparing the distance data obtained with a threshold distance value;
ii. when the difference between at least one item of distance data and the threshold distance is greater than the threshold deviation (17), triggering a warning device (13, 13') by way of the treatment means, indicating the existence of a defect present at least on the rolling surface (30, 30').

9. Method according to the preceding claim, wherein it comprises a prior step (E0) of calibrating the analysis device (7).
